# EUROPEAN PATENT SPECIFICATION

(11) **EP 3 939 916 B1**
(45) Date of publication and mention of the grant of the patent: **01.10.2025**
(21) Application number: 21175705.9
(22) Date of filing: 25.05.2021
(51) Int. Cl.: B65G 57/18, B21B 39/00, B21C 35/00

(54) **APPARATUS AND METHOD FOR LOADING A LAYER OF PROFILES ONTO A SUPPORT**
VORRICHTUNG UND VERFAHREN ZUM LADEN EINER SCHICHT VON PROFILEN AUF EINEN TRÄGER
APPAREIL ET PROCÉDÉ POUR LE CHARGEMENT D'UNE COUCHE DE PROFILS SUR UN SUPPORT

(30) Priority: 17.07.2020 IT 202000017473
(43) Date of publication of application: 19.01.2022
(73) Proprietor: PRESEZZI EXTRUSION SPA, 20871 Vimercate (MB) (IT)
(72) Inventor: Ronchi, Fabio, 25080 Nuvolera (BS) (IT); Bono, Rossano, 25038 Rovato (BS) (IT)
(74) Representative: Ripamonti, Enrico

(56) References cited:
- EP-A2- 1 356 876
- EP-A2- 2 374 742
- CN-A- 111 039 029
- JP-A- S5 957 824

## Description

The present invention relates to an apparatus and a method for loading a layer of aluminium alloy longitudinal profiles onto a support intended to be positioned in an automatic or manual warehouse.

Solutions are known in which there is a station for picking up the longitudinal profiles. It is placed to the side of a platform (known as a skid in technical jargon) intended to be placed in an automatic or manual warehouse. Two operators grasp the longitudinal profiles from corresponding ends and move them by hand from the picking station to the platform. This solution is not free from drawbacks. In fact, such solution is tiring for the operator. Furthermore, the repetitiveness of the task increases the risk of distractions which could be the cause of scratches on the profiles or accidental injuries.

EP 2 374 742 A2 discloses an apparatus for loading a layer of longitudinal profiles onto a support, said apparatus comprising:
- a picking station for picking the profiles comprising a profile rest means;
- a loading station for loading the profiles onto the support;
- a transfer means for transferring the layer of profiles from the picking station to the loading station, wherein said transfer means for transferring the profiles from the picking station to the loading station comprises first and second gripping means for gripping corresponding ends of the layer and intermediate gripping means for compensating for a deformation of the layer of profiles induced by the force of gravity that can be at least partially positioned between the first and the second gripping means, and wherein said transfer means comprises a displacement means for displacing the first, second and intermediate gripping means of the picking station to an area below the loading station.

The aim of the present invention is to provide an apparatus and a method for loading aluminium alloy longitudinal profiles which enables the physical strain of the operators to be reduced and production to be made quicker. The defined technical task and the specified aims are substantially achieved by an apparatus according to claim 1 and a method according to claim 5.

Further characteristics and advantages of the present invention will become more apparent from the following indicative and therefore nonlimiting description of an apparatus and a method for loading aluminium alloy longitudinal profiles as illustrated in the appended drawings, in which:
- figures 1-3 show three lateral views of distinct configurations of a portion of the apparatus according to the present invention;

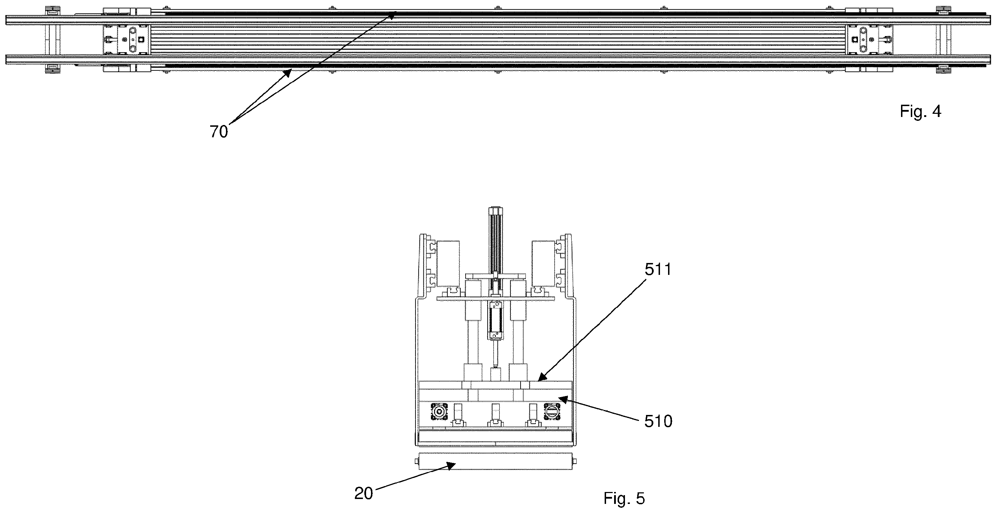

- figures 4 and 5 show plan and front views of the solution illustrated in figures 1-3 ;

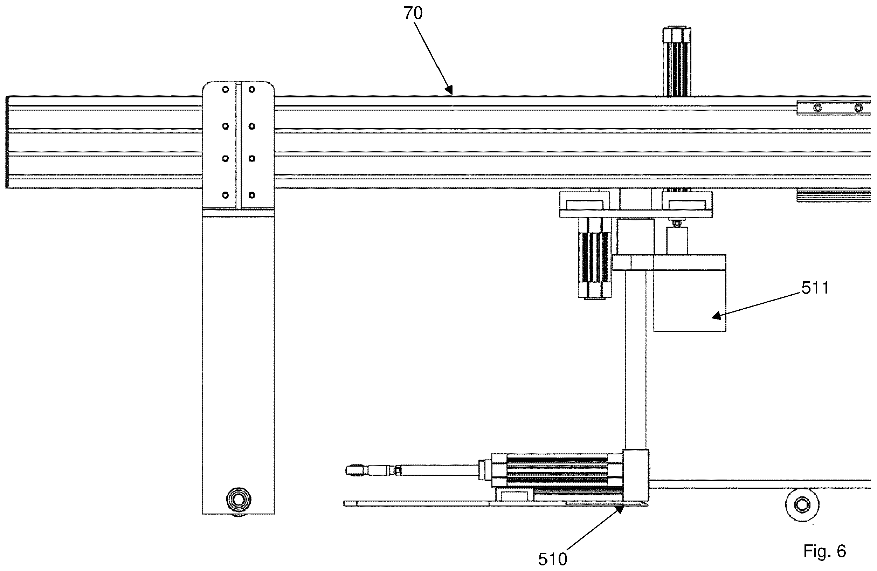

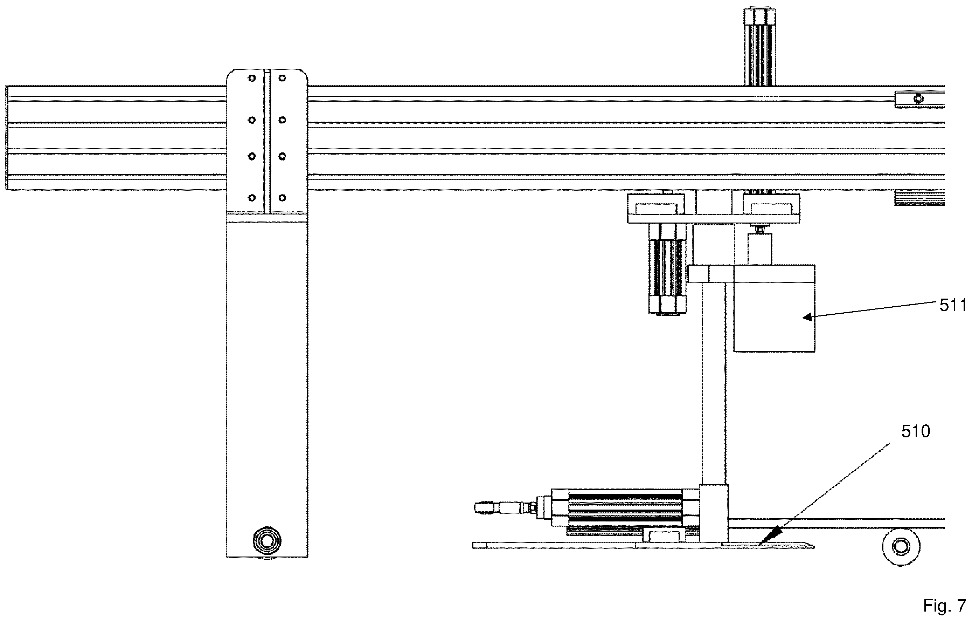

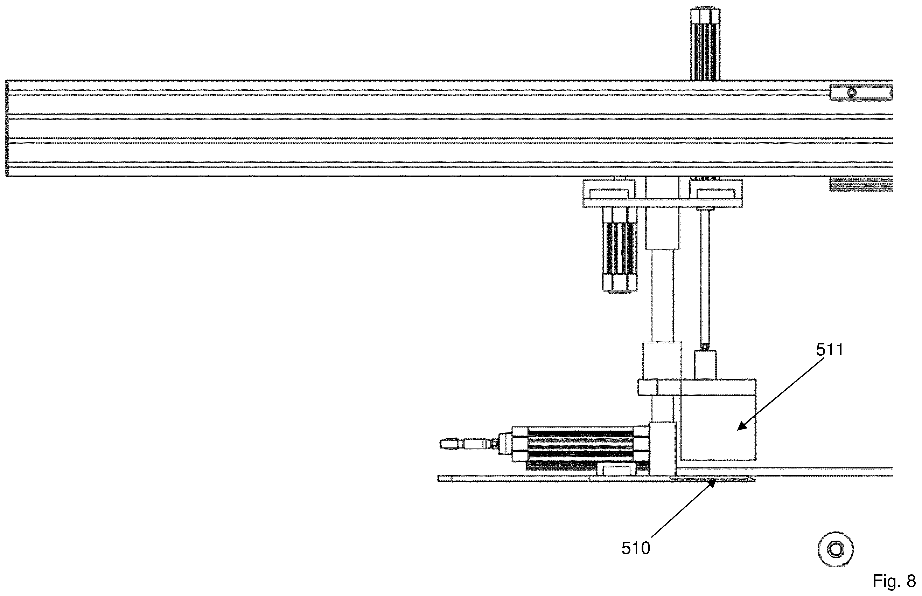

- figures 6, 7, 8 show three enlargements of figures 1, 2 and 3, respectively;
- figures 9 and 10 show perspective views of the solution of figures 1, 2 and 3 in two distinct configurations;

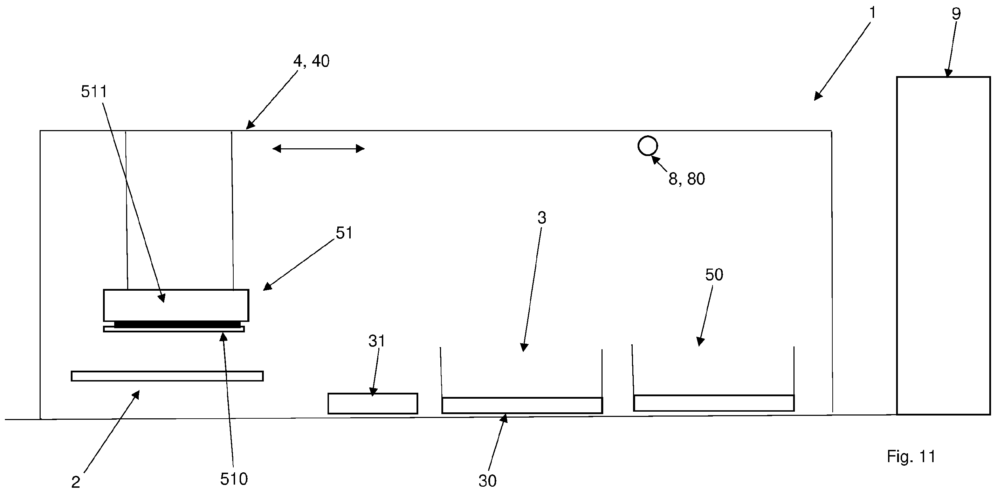

- figure 11 shows a schematic view of the apparatus according to the present invention.

In the appended figures, the reference number 1 indicates an apparatus for loading a layer of aluminium alloy longitudinal profiles onto a support intended to be positioned in a warehouse (which may be automatic or manual). Such support is known in the technical sector and is called a "skid". It typically comprises a movable element. It is advantageously a platform from which some bars project upwards to hinder the falling of the profiles.

The apparatus 1 comprises a station 2 for picking the profiles. The picking station 2 for picking the profiles in turn comprises a predetermined profile rest means 20. Such profile rest means 20 comprises for example a succession of rollers (idle or motorised) or a conveyor belt for facilitating the positioning of the profiles. Such rest means 20 may be motorised for moving the profiles or idle for facilitating the advancement thereof.

The apparatus 1 also comprises a loading station 3 for loading the profiles onto the support 30. Such station 3 is advantageously placed alongside the picking station 2.

The apparatus 1 comprises a transfer means 4 for transferring the layer of profiles from the picking station 2 to the loading station 3. The transfer means 4 then picks the layer from the picking station 2 and positions it on a support at the loading station 3. The loading station 3 for loading the layer of profiles onto the support 30 therefore defines a station for the unloading of the profiles from the transfer means 4.

The transfer means 4 comprises first and second gripping means 51, 52 for gripping opposite ends of the layer. The first and the second gripping means 51, 52 are appropriately, but not necessarily, specular. They enable opposite ends of the layer to be grasped for subsequent movement.

Appropriately, the first gripping means 51 comprises a lower clamping element 510 which cooperates with an upper clamping element 511 for clamping one end of the layer between them. The lower clamping element 510 and the upper clamping element 511 define a lower jaw and an upper jaw. The lower clamping element 510 is for example a retractable element. In an operating configuration it projects towards the second gripping means 52. In this way it can be positioned below the layer. In a disengaged configuration, the lower clamping element 510 is located in a position further away from the second gripping means 52 with respect to in the operative configuration.

The upper clamping element 511 defines an upper pressing element. It is positioned above the layer of profiles pressing it towards the lower clamping element 510. Both the lower clamping element 510 and the upper clamping element 511 can move between the top and the bottom, in particular they can translate between the top and the bottom. The displacement between the top and the bottom of the upper clamping element 511 and the lower clamping element 511 may be synchronised and contemporary. For example, this takes place after having grasped the layer of profiles by means of the first gripping means 51. Alternatively, the lower clamping element 510 and the upper clamping element 511 are movable with respect to each other. For example, this takes place before the clamping of the layer of profiles by means of the first gripping means 51.

The apparatus 1 further comprises a displacement means 40 for displacing the first and the second gripping means 51, 52 and the compensation means 6 from the picking station 2 to the loading station 3. This enables the layer of profiles to be moved for transferring it from the picking station 2 to an area below the loading station 3.

The displacement means 40 comprises a means for raising and lowering the gripping means 51, 52. The displacement means 40 also comprises a movement means (typically, but not necessarily, a translation means) for moving the first and second gripping means 51, 52 from a position in which it surmounts the picking station 2 to a position in which it surmounts the loading station 3.

The transfer means 4 comprises a compensation means 6 for compensating the deformation of the longitudinal profiles induced by the force of gravity. The compensation means 6 are at least in part positioned between the first and the second gripping means 51, 52. Appropriately, the compensation means 6 extends between two imaginary vertical planes 601, 602 placed respectively at the first and second gripping means. The two planes 601, 602 extend orthogonally to a connection direction of the first and the second gripping means (or however orthogonally to a preponderant extension direction of the layer of profiles). The compensation means 6 enables deformations of the profiles of the layer to be limited or prevented during the passage from the picking station 2 to the loading station 3.

The compensation means 6 comprises at least one intermediate support 61 between the first and the second gripping means 51, 52. The compensation means 6 enables a lower abutment to be exerted on said layer of profiles preventing or minimising camber (deformation) towards the bottom of a central area of the profiles of said layer (i.e. intermediate between the first and the second gripping means 51, 52). Appropriately there is at least one imaginary horizontal plane which connects said first and second gripping means 51, 52 and intercepting said support means 6. Appropriately, the compensation means 6 comprises a plurality of intermediate supports 61. In operation the intermediate supports 61 define rest areas that lie on the same imaginary plane. At least one intermediate support 61 defines a rest area and not an area for blocking the layer of profiles. At least one intermediate support 61 comprises an idle roller on which the layer of profiles rests. What is described for one individual intermediate support 61 can be repeated for every intermediate support 61.

The compensation means 6 comprises at least one carriage 610. Such carriage 610 sustains said intermediate support 61.

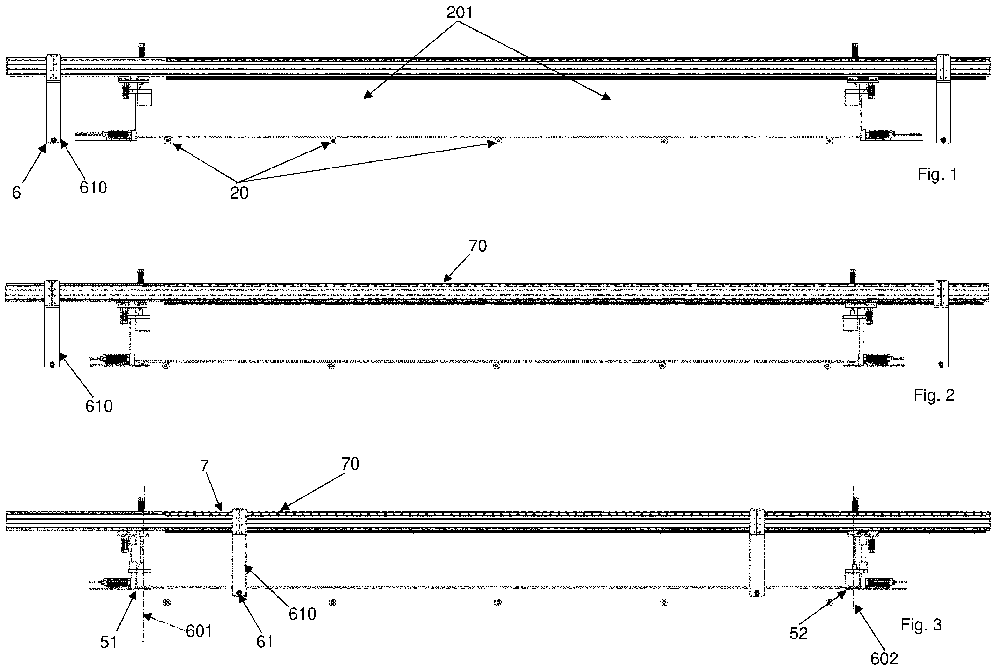

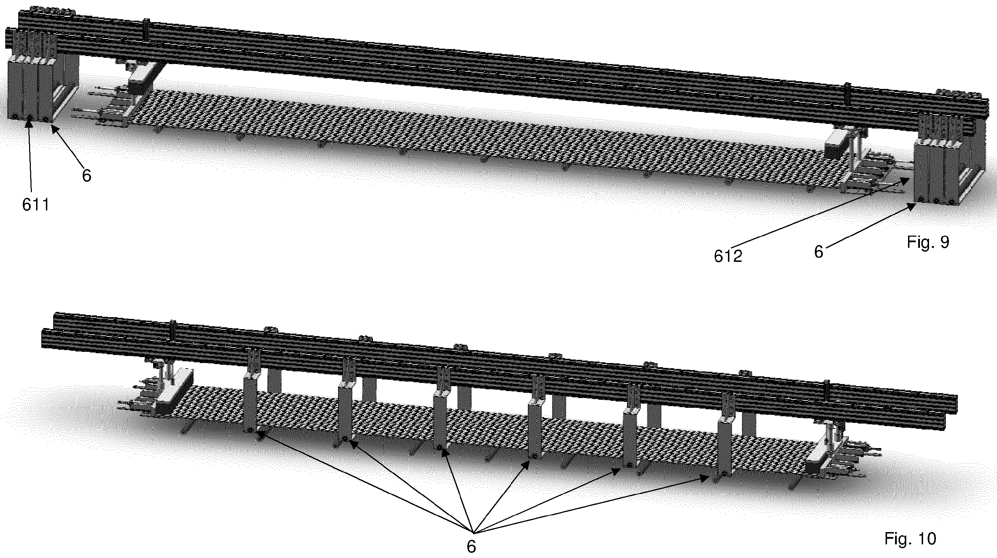

The carriage 610 is positioned between the first and the second gripping means 51, 52 in a profile transfer configuration. The carriage 610 is positioned between two imaginary vertical planes 601, 602 placed respectively at the first and second gripping means 51, 52 (see for example figures 3 and 10). In fact, in such area the intermediate support 61 is positioned in an intermediate area of the longitudinal extension of the longitudinal profiles.

In a rest configuration, the carriage 610 disengages a space 201 which surmounts the rest means 20 (see for example figure 1 or 9). In this way it enables the profiles placed on the rest means 20 to be raised and inserted between the profiles and the rest means 20.

The compensation means 6 disengages the layer of profiles in a configuration in which it surmounts the loading station 3.

By way of example, but not necessarily, the transfer means 4 comprises a frame 7 to which said at least one part of the first and second gripping means 51, 52 is constrained and with respect to which said first and second gripping means 51, 52 can be raised/lowered.

The frame 7 defines a guide means 70 for guiding at least one carriage 610. The carriage 610 hangs on the frame 7. The carriage 610 can slide along a direction parallel to the connection direction of the first and the second gripping means 51, 52. In this way the carriage 610 can pass from the rest configuration to the profile transfer configuration and vice versa. Appropriately, the compensation means 6 comprises a plurality of carriages 610. Each carriage 610 comprises a corresponding intermediate support 61. For example, the compensation means can comprise a first group 611 of carriages 610 constrained to one another. Preferably, they can be mutually packed together and distanced. In particular, in the rest configuration they are packed (in that way they reduce the dimensions). In the transfer configuration they are distanced from one another along the frame guide means 70. Appropriately, the carriages 610 of the first group 611 are mutually constrained for example with rods or flexible elements. The carriages of the first group 611 can be telescopically extracted or however extracted in succession with one another. After a first extraction stroke of one of said carriages 610 of the first group 611 a second one of said carriages 610 of the first group 611 starts to move (appropriately this is repeated for the subsequent carriages if the first group 611 of carriages 610 comprises more than two carriages 610).

Appropriately, as well as the first group 611 of carriages, the compensation means 6 can comprise a second group 612 of carriages. The carriages of the first group 611 are compacted with one another at a first end of the guide means 70 of the frame 7. The carriages of the second group 612 are compacted with one another at a second end of the guide means 70 of the frame 7.

The displacement means 40 for displacing the first and the second gripping means 51, 52 and the compensation means 6 from the picking station 2 to the loading station 3-determine a displacement of said frame 7. The displacement means 40 determines a displacement of the frame transversally (preferably orthogonally) to a connection direction of the first and the second gripping means 51, 52. In particular, the frame 7 can move orthogonally to a sliding direction of the carriage 610 along the guide means 70.

Advantageously, the apparatus 1 comprises a means 8 for recognising the type and/or number of profiles moved by said apparatus 1. The recognition means 8 comprises an acquisition means 80 for acquiring at least one image. The recognition means 8 appropriately further comprises:
- a database in which a plurality of images relating to various types of profiles is pre-stored;
- a comparison means for comparing the images acquired by the recognition means 8 and the images pre-stored in said database.

Appropriately, the recognition means 8 is placed at the loading station 3, but it could possibly also be placed in other portions of the apparatus 1. It could appropriately be solidly constrained to the frame 7.

Appropriately, the apparatus 1 comprises a delivery station 50. Such delivery station 50 determines the outlet of the support from the apparatus 1. Appropriately, the apparatus 1 comprises a displacement means for displacing the support from the loading station 3 to the delivery station 50. In this way, when the support 30 is loaded it is transferred from the loading station 3 to the delivery station 50. While the delivery station 50 is waiting for the displacement of the support 30 towards the automatic or manual warehouse a new support can be filled in the loading station 3, optimising the times.

The object of the present invention is also a system comprising:
- an automatic warehouse 9 (therefore provided with an automatic picking means of the support - skid - on which the profiles placed in the warehouse are positioned; this taking place on specific request) or a manual warehouse; for example it may be an automatic warehouse made by the company DimaSimma.
- an apparatus 1 having one or more of the characteristics described above;
- a displacement means for displacing said support 30 in said warehouse 9. In fact, the apparatus 1 according to the present invention is advantageously used for loading supports which will then be placed in predetermined positions of the automatic or manual warehouse 9.

The subject matter of the present invention is also a method for loading a layer of aluminium alloy longitudinal profiles onto a support 30. This method is implemented by an apparatus 1 having one or more of the features described previously. The method comprises the step of positioning said layer 10 of longitudinal profiles on a rest means 20. The step of positioning the layer 10 on the rest means 20 can take place by making the profiles advance along a supply line until reaching said rest means 20. The rest means 20 can comprise for example a conveyor belt and/or one or more rollers (one or more of which can be motorised or idle). Typically the longitudinal profiles of the layer 10 all have the same cross section. Appropriately, the profiles of the same layer 10 are all the same.

The method comprises the step of grasping, at two opposite ends, said layer 10 of longitudinal profiles by means of first and second gripping means 51, 52. The first and second gripping means 51, 52 directly grasp the layer without any intermediate/interposed elements. The first gripping means 51 grasps a first end of the layer 10 of profiles. The first gripping means 51 traps the first end of the layer of profiles between them. The second gripping means 52 grasps a second end of the layer 10 of profiles. The second gripping means 52 traps the second end of the layer of profiles between them. The first gripping means 51 comprises a lower clamping element 510 and an upper clamping element 511. The step of grasping one end of said layer 10 by means of the first gripping means 51 comprises the step of moving (typically in the horizontal direction) said lower clamping element 510 positioning it below the vertical of the upper clamping element 511 (see step from figure 1 to figure 2). Appropriately, this envisages extracting such lower clamping element 510 from a compartment in which it is placed to rest. The step of grasping one end of said layer 10 by the first gripping means 51 further comprises the step of moving the lower clamping element 510 and the upper clamping element 511 closer to one another, typically along a vertical direction. What has been described for the step of grasping one end of the layer 10 of profiles by the first gripping means 51 is repeated for the step of grasping the opposite end of the layer 10 by the second gripping means 52.

The step of grasping the layer 10 of profiles at two opposite ends comprises the step of moving the lower clamping element 510 and the upper clamping element 511 closer to one another, trapping one end of the layer 10 between the lower clamping element 510 and the upper clamping element 511.

The method further comprises the step of displacing said layer 10 by said rest means 20 (see figure 3). Typically, the step of displacing the layer 10 envisages lifting the layer 10. The step of displacing the layer 10 from the rest means 20 makes the layer 10 assume a deformed configuration in which: the first and second gripping means 51, 52 grasp the two corresponding opposite ends of the layer 10 and the layer 10 in an intermediate area between the first and the second gripping means 51, 52 undergoes by gravity a deformation that defines a concavity facing upwards; there is therefore camber transverse to the longitudinal extension of the profiles.

The method comprises a step of positioning a compensation means 6 for compensating for the deformation of the longitudinal profiles in an intermediate area between the first and the second gripping means 51, 52 (see figure 3).

The step of positioning the compensation means 6 comprises the step of positioning at least one support 61 of the layer 10 between said layer 10 and said rest means 20. This takes place after the step of displacing the layer 10 from the rest means 20.

The step of positioning at least one support 61 of the layer 10 comprises the step of positioning a carriage 610 between the first and the second gripping means 51, 52 (appropriately the carriage 610 is placed between two imaginary vertical planes 601, 602 passing through the first and the second gripping means 51, 52 and transverse or, better, orthogonal to the preponderant extension direction of the profiles). The support 61 is placed on the carriage 610 between the layer 10 and the rest means 20. The support 61 could for example be a rotatable roller (typically idle).

The carriage 610 is movable along the guide means 70. Such guide means 70 enables the movement of the carriage 610 along a rectilinear trajectory which extends at least in part transversally (preferably orthogonally) between two imaginary vertical planes 601, 602 passing respectively through the first and the second gripping means 51, 52.

The step of positioning the carriage 610 envisages moving the carriage 610 bringing it from a rest configuration (see for example figure 2 or 9) to a configuration for transferring the layer 10 (see for example figure 3 or 10). This takes place by moving the carriage 610 along the guide means 70. In particular, for performing such step the carriage 610 is brought from a more peripheral position to a more central position of the guide means 70. In this way it supports an intermediate position of the layer 10 compensating in full or in part for the deformation induced by the force of gravity.

Appropriately the step of positioning at least one support 61 of the layer 10 comprises the step of positioning, between the two imaginary vertical planes 601, 602 passing respectively through the first and the second gripping means 51, 52, a plurality of carriages 610 provided with a respective support 61.

The step of positioning the compensation means 6 comprises the step of moving a plurality of carriages 610 for positioning corresponding supports 61 below the layer 10. This envisages moving a first group 611 of carriages which in a rest configuration are grouped at a more extreme position of the guide means 70 and in a transfer configuration of the layer 10 are distanced from one another in a more central position of the guide means 70 (therefore in the rest configuration the first group 611 of carriages is closer to the first gripping means 51 than to the second gripping means and in the transfer configuration it is more displaced towards the second gripping means 52 than in the rest configuration).

Appropriately, the step of moving the first group 611 of carriages displacing them from the rest configuration to the transfer configuration of the layer 10 envisages moving a first carriage while keeping a second carriage of the first group 611 still. The first and the second carriage are constrained by a connection means (e.g. by telescopic rods or a towing element such as a rope or a chain). When the first carriage is moved away from the second carriage for a predetermined distance the second carriage is placed in movement by the connection means. The first carriage therefore tows the second carriage by the connection means.

Possibly, in the first group 611 of carriages, there may be two or more carriages and in that case they are advantageously constrained to one another so that one enables the towing of the subsequent one.

The step of positioning the compensation means 6 can comprise the step of also moving a second group 612 of carriages which in a rest configuration is grouped closer to the second gripping means 52 and not to the first gripping means 51. In the transfer configuration the second gripping means 52 is more displaced towards the first gripping means 51 with respect to in the transfer configuration. Passing from the rest configuration to the transfer one, the method envisages moving the carriages of the first and of the second group 611, 612 along opposite directions.

The method comprises the step of moving the first and second gripping means 51, 52 and said compensation means 6 positioning said layer 10 of profiles above said support 30. This advantageously envisages displacing transversally to a vertical direction (preferably along a horizontal direction) the layer 10 of profiles. On this point, a frame 7 to which the first and the second gripping means 51, 52 and the compensation means 6 are connected is moved. The carriage 610 hangs on the frame 7.

The method, after the step of positioning said layer 10 above said support 30, can comprise the steps of:
- picking and resting a protective means 31 above said layer 10 of profiles; such protective means can for example comprise one or more strips or a protective sheet; such protective means can for example be picked from a container adjacent to the support 30; appropriately the protective means 31 is picked by a robotised system, e.g. by means of suction means, e.g. suction cups;
- positioning an additional layer of longitudinal profiles above the protective means 31.

It is therefore possible to position on top of the support alternating layers of longitudinal profiles and protective means.

Appropriately, the method comprises the step of acquiring an image of the layer 10 by a camera (photo camera or video camera). Advantageously, a processing unit for processing such image enables the number of profiles detected in such image to be counted. Appropriately, the method enables the shape of the profiles to be recognised, comparing the image detected and a database of pre-stored images. In this way, the number and/or shape of the profiles placed on the support 30, which is intended to be positioned in a predetermined area of the automatic or manual warehouse 9, is stored.

The present invention achieves important advantages.

First of all it enables the manual work of the operators to be reduced, thus reducing efforts and minimising the risk of injuries connected with performing a repetitive task. In the second place, it enables productivity to be accelerated without penalising the amount of work performed (compared to the case in which the work is performed manually by two operators).

The invention as it is conceived is susceptible to numerous modifications and variants. Furthermore, all the details can be replaced with other technically equivalent elements. In practice, all the materials used, as well as the dimensions, can be any whatsoever, according to need. The scope of protection of the invention is namely defined by the appended claims.

## Claims

1. An apparatus for loading a layer of longitudinal profiles made of aluminium alloy onto a support, said apparatus (1) comprising:
i) a picking station (2) for picking the profiles comprising a profile rest means (20);
ii) a loading station (3) for loading the profiles onto the support (30);
iii) a transfer means (4) for transferring the layer of profiles from the picking station (2) to the loading station (3);
said transfer means (4) for transferring the profiles from the picking station (2) to the loading station (3) comprising:
- first and second gripping means (51, 52) for gripping corresponding ends of the layer;
- a compensation means (6) for compensating for a deformation of the layer of profiles induced by the force of gravity that can be at least partially positioned between the first and the second gripping means (51, 52);
- a displacement means (40) for displacing the first and the second gripping means (51, 52) and the compensation means (6) of the picking station (2) to an area below the loading station (3), wherein the compensation means (6) comprises at least one intermediate support (61) between the first and the second gripping means (51, 52), the compensation means (6) comprising at least one carriage (610) which:
- in a profile transfer configuration can be positioned between the first and the second gripping means (51, 52);
- in a rest configuration disengages a space (201) that surmounts said rest means (20).

2. The apparatus according to claim 1, **characterised in that** the transfer means (4) comprises a frame (7) to which said at least one part of the first and second gripping means (51, 52) is constrained and with respect to which said first and second gripping means (51, 52) can be raised/lowered; said frame (7) defining a guide means (70) for guiding said at least one carriage (610), said carriage (610) hanging from the frame (7).

3. The apparatus according to claim 1, **characterised in that** it comprises a means (8) for recognising the type and/or number of profiles moved by said apparatus (1); said recognition means (8) comprising an acquisition means (80) for acquiring at least one image.

4. A system comprising:
- an automatic or manual warehouse (9);
- an apparatus (1) according to any one of claims 1 to 3;
- a displacement means for displacing said support (30) in said warehouse (9).

5. A method for loading a layer of aluminium alloy longitudinal profiles onto a support with an apparatus according to any one of the preceding claims 1-3, comprising the steps of:
- positioning said layer (10) of longitudinal profiles on a predetermined rest means (20);
- grasping, at two opposite ends, said layer (10) of longitudinal profiles by means of the first and second gripping means (51, 52);
- displacing said layer (10) from said rest means (20) making said layer (10) assume a deformed configuration in which: the first and second gripping means (51, 52) grasp the two corresponding opposite ends of the layer (10), the layer (10) in an intermediate area between the first and the second gripping means (51, 52) undergoing by gravity a deformation that defines a concavity facing upwards;
- positioning the compensation means (6) for compensating the deformation of the longitudinal profiles in an intermediate area between the first and the second gripping means (51, 52);
- moving the first and second gripping means (51, 52) and said compensation means (6) positioning said layer (10) of profiles above said support (30), wherein the step of positioning the compensation means (6) comprises the step of positioning at least one support (61) of the layer (10) between said layer (10) and said rest means (20).

6. The method according to claim 5, **characterised in that** , following the step of positioning said layer (10) above said support (30), it comprises the steps of:
- picking and resting a protective means (31) above said layer (10) of profiles;
- positioning an additional layer of longitudinal profiles above the protective means (31).

7. The method according to claim 4 or claim 5, **characterised in that** the step of grasping in two opposite ends the layer (10) of profiles comprises the step of moving a lower clamping element (510) and an upper clamping element (511) closer to one another, trapping one end of the layer (10) between the lower clamping element (510) and the upper clamping element (511).

## Patentansprüche

1. Vorrichtung zum Laden einer Lage von Längsprofilen aus einer Aluminiumlegierung auf einen Träger, die Vorrichtung (1) umfassend:
i) eine Aufnahmestation (2) zum Aufnehmen der Profile, umfassend eine Profilauflageeinrichtung (20);
ii) eine Ladestation (3) zum Laden der Profile auf den Träger (30);
iii) eine Überführungseinrichtung (4) zum Überführen der Lage von Profilen von der Entnahmestation (2) zu der Ladestation (3);
wobei die Überführungseinrichtung (4) zum Überführen der Profile von der Entnahmestation (2) zu der Ladestation (3) Folgendes umfasst:
- eine erste und eine zweite Greifeinrichtung (51, 52) zum Ergreifen der entsprechenden Enden der Lage;
- ein Ausgleichseinrichtung (6) zum Ausgleichen einer durch die Schwerkraft induzierten Verformung der Lage von Profilen, das zumindest teilweise zwischen der ersten und der zweiten Greifeinrichtung (51, 52) positioniert werden kann;
- eine Verschiebeeinrichtung (40) zum Verschieben der ersten und der zweiten Greifeinrichtung (51, 52) und der Ausgleichseinrichtung (6) der Entnahmestation (2) in einen Bereich unterhalb der Ladestation (3), wobei die Ausgleichseinrichtung (6) mindestens einen Zwischenträger (61) zwischen der ersten und der zweiten Greifeinrichtung (51, 52) umfasst, die Ausgleichseinrichtung (6) umfassend mindestens einen Schlitten (610), der:
- in einer Profilüberführungskonfiguration zwischen der ersten und der zweiten Greifeinrichtung (51, 52) positioniert werden kann;
- in einer Ruhekonfiguration einen Raum (201) freigibt, der über der Profilauflageeinrichtung (20) liegt.

2. Vorrichtung nach Anspruch 1, **dadurch gekennzeichnet, dass** die Überführungseinrichtung (4) einen Rahmen (7) umfasst, an dem der mindestens eine Teil der ersten und der zweiten Greifeinrichtung (51, 52) befestigt ist und in Bezug auf den die erste und die zweite Greifeinrichtung (51, 52) angehoben/abgesenkt werden kann; wobei der Rahmen (7) eine Führungseinrichtung (70) zum Führen des mindestens einen Schlittens (610) definiert, wobei der Schlitten (610) an dem Rahmen (7) hängt.

3. Vorrichtung nach Anspruch 1, **dadurch gekennzeichnet, dass** sie eine Einrichtung (8) zum Erkennen der Art und/oder Anzahl der von der Vorrichtung (1) bewegten Profile umfasst; die Erkennungseinrichtung (8) umfassend eine Erfassungseinrichtung (80) zum Erfassen mindestens eines Bilds.

4. System, umfassend:
- ein automatisches oder manuelles Lager (9);
- eine Vorrichtung (1) nach einem der Ansprüche 1 bis 3;
- eine Verschiebeeinrichtung zum Verschieben des Trägers (30) in dem Lager (9).

5. Verfahren zum Laden einer Lage von Längsprofilen aus einer Aluminiumlegierung auf einen Träger mit einer Vorrichtung nach einem der vorherigen Ansprüche 1-3, umfassend die folgenden Schritte:
- Positionieren der Lage (10) aus Längsprofilen auf einer vorbestimmten Auflageeinrichtung (20);
- Ergreifen der Lage (10) aus Längsprofilen an zwei gegenüberliegenden Enden mittels der ersten und der zweiten Greifeinrichtung (51, 52);
- Verschieben der Lage (10) aus der Auflageeinrichtung (20), wodurch die Lage (10) eine verformte Konfiguration annimmt, in der: die erste und die zweite Greifeinrichtung (51, 52) die zwei entsprechenden gegenüberliegenden Enden der Lage (10) ergreifen, wobei die Lage (10) in einem Zwischenbereich zwischen der ersten und der zweiten Greifeinrichtung (51, 52) durch die Schwerkraft eine Verformung erfährt, die eine nach oben gewandte Konkavität definiert;
- Positionieren der Ausgleichseinrichtung (6) zum Ausgleichen der Verformung der Längsprofile in einem Zwischenbereich zwischen der ersten und der zweiten Greifeinrichtung (51, 52);
- Bewegen der ersten und der zweiten Greifeinrichtung (51, 52) und der Ausgleichseinrichtung (6), die die Lage (10) von Profilen über dem Träger (30) positionieren, wobei der Schritt eines Positionierens der Ausgleichseinrichtung (6) den Schritt eines Positionierens mindestens eines Trägers (61) der Lage (10) zwischen der Lage (10) und den Auflageeinrichtungen (20) umfasst.

6. Verfahren nach Anspruch 5, **dadurch gekennzeichnet, dass** es nach dem Schritt eines Positionierens der Lage (10) über dem Träger (30) die folgenden Schritte umfasst:
- Aufnehmen und Auflegen einer Schutzeinrichtung (31) über der Lage (10) von Profilen;
- Positionieren einer zusätzlichen Lage von Längsprofilen über den Schutzeinrichtungen (31).

7. Verfahren nach Anspruch 4 oder Anspruch 5, **dadurch gekennzeichnet, dass** der Schritt eines Ergreifens der Lage (10) von Profilen an zwei gegenüberliegenden Enden den Schritt eines Annäherns eines unteren Einspannelements (510) und eines oberen Einspannelements (511) aneinander umfasst, wobei ein Ende der Lage (10) zwischen dem unteren Einspannelement (510) und dem oberen Einspannelements (511) eingefangen wird.

## Revendications

1. Appareil destiné au chargement de profilés longitudinaux en alliage d'aluminium sur un support, ledit appareil (1) comprenant :
i) un poste de prélèvement (2) destiné au prélèvement des profilés, comprenant un moyen de repos des profilés (20) ;
ii) un poste de chargement (3) destiné au chargement des profilés sur le support (30) ;
iii) un moyen de transfert (4) destiné au transfert des couches de profilés du poste de prélèvement (2) au poste de chargement (3) ;
ledit moyen de transfert (4) destiné au transfert des profilés du poste de prélèvement (2) au poste de chargement (3) comprenant :
- un premier et un deuxième moyen de préhension (51,52) permettant de saisir les extrémités correspondantes de la couche ;
- un moyen de compensation (6) destiné à la compensation de la déformation de la couche de profilés induite par la force de gravité, qui peut être au moins en partie positionné entre le premier et le deuxième moyen de préhension (51,52) ;
- un moyen de déplacement (40) destiné au déplacement du premier et du deuxième moyen de préhension (51, 52) ainsi que du moyen de compensation (6) du poste de prélèvement (2) vers une zone située sous le poste de chargement (3), dans lequel le moyen de compensation (6) comprend au moins un support intermédiaire (61) entre le premier et le deuxième moyen de préhension (51, 52), le moyen de compensation (6) comprenant au moins un chariot (610) qui :
- dans une configuration de transfert du profilé peut être disposé entre le premier et le deuxième moyen de préhension (51, 52) ;
- dans une configuration de repos libère un espace (201) qui surmonte ledit moyen de repos (20).

2. Appareil selon la revendication 1, **caractérisé en ce que** le moyen de transfert (4) comprend un cadre (7) auquel ladite au moins une partie du premier et du deuxième moyen de préhension (51, 52) est fixée et par rapport auquel ledit premier et deuxième moyen de préhension (51, 52) peut être levés/abaissés ; ledit cadre (7) définissant un moyen de guidage (70) permettant de guider ledit au moins un chariot (610), ledit chariot (610) étant suspendu au cadre (7).

3. Appareil selon la revendication 1, **caractérisé en ce qu'**il comprend un moyen (8) de reconnaissance du type et/ou du nombre de profilés déplacés par ledit appareil (1) ; ledit moyen de reconnaissance (8) comprenant un moyen d'acquisition (80) permettant d'acquérir au moins une image.

4. Système, comprenant :
- un magasin automatique ou manuel (9) ;
- un appareil (1) selon l'une quelconque des revendications 1 à 3 ;
- un moyen de déplacement permettant de déplacer ledit support (30) dans ledit magasin (9).

5. Procédé de chargement d'une couche de profilés longitudinaux en alliage d'aluminium sur un support à l'aide d'un appareil selon l'une quelconque des revendications précédentes 1 à 3, comprenant les étapes suivantes :
- le positionnement de ladite couche (10) de profilés longitudinaux sur un moyen de repos prédéterminé (20) ;
- la saisie, à deux extrémités opposées, de ladite couche (10) de profilés longitudinaux au moyen du premier et du deuxième moyen de préhension (51,52) ;
- le déplacement de ladite couche (10) dudit moyen de repos (20) faisant prendre à ladite couche (10) une configuration déformée dans laquelle : le premier et le deuxième moyen de préhension (51,52) saisissent les deux extrémités opposées correspondantes de la couche (10), la couche (10) dans une zone intermédiaire entre le premier et le deuxième moyen de préhension (51,52) subissant par gravité une déformation qui définit une concavité orientée vers le haut ;
- le positionnement des moyens de compensation (6) pour compenser la déformation des profilés longitudinaux dans une zone intermédiaire entre le premier et le deuxième moyen de préhension (51,52) ;
- le déplacement du premier et du deuxième moyen de préhension (51,52) et dudit moyen de compensation (6) en disposant ladite couche (10) de profilés au-dessus dudit support (30), dans lequel l'étape de positionnement du moyen de compensation (6) comprend l'étape de positionnement d'au moins un support (61) de la couche (10) entre ladite couche (10) et ledit moyen de repos (20).

6. Procédé selon la revendication 5, **caractérisé en ce que**, après l'étape de positionnement de ladite couche (10) au-dessus dudit support (30), il comprend les étapes suivantes :
- le prélèvement et la pose d'un moyen de protection (31) au-dessus de ladite couche (10) de profilés ;
- le positionnement d'une couche supplémentaire de profilés longitudinaux au-dessus des moyens de protection (31).

7. Procédé selon la revendication 4 ou 5, **caractérisé en ce que** l'étape de saisie à deux extrémités opposées de la couche (10) de profilés comprend l'étape de rapprochement d'un élément de serrage inférieur (510) et d'un élément de serrage supérieur (511), emprisonnant une extrémité de la couche (10) entre l'élément de serrage inférieur (510) et l'élément de serrage supérieur (511).
